# EUROPÄISCHE PATENTSCHRIFT

(11) **EP 3 676 117 B1**
(45) Veröffentlichungstag und Bekanntmachung des Hinweises auf die Patenterteilung: **10.08.2022**
(21) Anmeldenummer: 18756399.4
(22) Anmeldetag: 10.08.2018
(51) Int. Cl.: B60J 7/00, B60R 5/04, E06B 9/24

(54) **ROLLOANORDNUNG MIT WICKELWELLENHÜLLROHR**
ROLLERBLIND ARRANGEMENT WITH WINDING CASING
ARRANGEMENT DE STORE ENROULEUR AVEC GAINE TUBULAIRE

(30) Priorität: 29.08.2017 DE 102017119767
(43) Veröffentlichungstag der Anmeldung: 08.07.2020
(73) Patentinhaber: Webasto SE, 82131 Stockdorf (DE)
(72) Erfinder: ROCKELMANN, Andreas, 82131 Stockdorf (DE)
(74) Vertreter: advotec.
(86) Internationale Anmeldenummer: PCT/EP2018/071754
(87) Internationale Veröffentlichungsnummer: WO 2019/042742

(56) Entgegenhaltungen:
- EP-A2- 1 160 110
- EP-A2- 2 641 762
- WO-A1-03/024729
- DE-A1-102004 041 385
- DE-A1-102007 011 414

## Beschreibung

Die Erfindung betrifft eine Rolloanordnung mit den Merkmalen des Oberbegriffs des Patentanspruchs 1.

Aus der Praxis ist eine Rolloanordnung bekannt, die bei einem Kraftfahrzeug zum Abschatten eines transparenten Dachabschnitts dient, der beispielsweise von einem Glasdeckel einer Schiebedachanordnung oder auch von einem Glasfestdachelement gebildet ist. Die bekannte Rolloanordnung umfasst als Beschattungselement eine Rollobahn, die auf eine Wickelwelle aufwickelbar bzw. von der Wickelwelle abwickelbar ist, um den entsprechenden transparenten Dachabschnitt abzuschatten.

Des Weiteren ist es bekannt, eine Wickelwelle einer Rolloanordnung mit einer gekrümmten, fahrzeugfesten Lagerstrebe auszubilden, die von einer flexiblen Hüllrohranordnung umgriffen ist, an die die Rollobahn mit einem sich in Rolloquerrichtung erstreckenden Rand angebunden ist. Die Hüllrohranordnung bildet einen Wickelkern für die Rollobahn und ist mittels einer Wickelfeder in Aufwickelrichtung vorgespannt, so dass die Rollobahn bei Freigabe eines Zugspriegels, der an der der Wickelwelle abgewandten Stirnseite der Rollobahn befestigt ist, selbsttätig auf die Wickelwelle aufgewickelt wird. Die Hüllrohranordnung kann des Weiteren an ihren beidseits angeordneten Stirnseiten jeweils eine Lagerbuchse aufweisen, die an einem korrespondierenden fahrzeugfesten Lagerteil drehbar gelagert ist. Wenn die Rolloanordnung eine seitengeführte Rolloanordnung darstellt, weist die Rollobahn an ihren seitlichen Rändern jeweils ein Führungsband auf. Dieses ist dann in einer jeweiligen fahrzeugfesten Führungsschiene geführt und an einer der Lagerbuchsen befestigt. Die Führungsbänder werden damit beim Aufwickeln der Rollobahn im Bereich der Lagerbuchsen aufgewickelt.

Ferner ist es bekannt, eine Hüllrohranordnung einer Wickelwelle aus einzelnen Rohrsegmenten auszubilden, die über eine Verzahnung miteinander in Eingriff stehen. Dies hat aber den Nachteil, dass es bei einem Verdrehen der Rohrsegmente zueinander zu einer unerwünschten Geräuschentwicklung kommen kann. Hierbei besteht das Risiko, dass die Wickelwelle durch ein Verkanten der Rohrsegmente schwergängig wird. Zudem ist diese Wickelwelle aufgrund der Vielzahl an Rohrsegmenten mit einem erhöhten Montageaufwand verbunden. Darüber hinaus können sich die Rohrsegmente auf der Rollobahn abzeichnen, was im abgewickelten Zustand der Rollobahn vom Fahrzeuginnenraum aus sichtbar wird.

Auch ist es bekannt, als Hüllrohr ein Wellrohr einzusetzen, das mittels einer Wickelfeder in Aufwickelrichtung vorgespannt ist. Jedoch kann sich ein solches Hüllrohr bei der Übertragung von Drehmomenten aufgrund der niedrigen Torsionssteifigkeit elastisch oder sogar plastisch verformen. Dies kann wiederum zu einem Relativversatz von an den Längsrändern der Rollobahn angeordneten Seitenführungen und damit zu einer Wellen- und Faltenbildung an der Rollobahn führen, was gegebenenfalls dadurch ausgeglichen werden kann, dass die zur Seitenführung eingesetzten Führungsbänder als Rollfedern ausgebildet sind, die einen zusätzlichen Antrieb für die Hüllrohranordnung bilden, was sich aber in den Kosten der Rolloanordnung niederschlägt.

Aus der Druckschrift WO 03/024729 A1 ist eine Rolloanordnung bekannt, die eine Rollobahn und eine Wickelwelle aufweist, auf die die Rollobahn aufwickelbar ist. Die Wickelwelle umfasst eine Lagerstrebe, auf der eine Hüllrohranordnung in Form eines Wellrohrs angeordnet ist.

Aus der Druckschrift DE 10 2004 041 385 A1 ist eine Rolloanordnung bekannt, die eine Rollobahn und eine Wickelwelle umfasst, auf die die Rollobahn aufwickelbar oder von der die Rollobahn abwickelbar ist. Die Wickelwelle umfasst eine flexible Hüllrohranordnung, die von einer fahrzeugfesten Lagerstrebe durchgriffen ist. Die Hüllrohranordnung umfasst metallische Balgelemente und Rohrelemente aus Kunststoff oder Metall, die alternierend miteinander verbunden sind.

Der Erfindung liegt die Aufgabe zugrunde, eine gemäß der einleitend genannten Gattung ausgebildete Rolloanordnung mit einer optimierten Hüllrohranordnung der Wickelwelle zu schaffen.

Diese Aufgabe ist erfindungsgemäß durch die Rolloanordnung mit den Merkmalen des Patentanspruches 1 gelöst.

Die Rolloanordnung nach der Erfindung umfasst mithin für die Wickelwelle eine Hüllrohranordnung mit einem Hüllrohrelement, das in Achsrichtung betrachtet mehrere Flexabschnitte umfasst, die von mindestens einem Stabilisierungsabschnitt unterbrochen sind, der gegenüber den Flexabschnitten eine erhöhte Torsionssteifigkeit hat. Die Flexabschnitte des Hüllrohrelements gewährleisten dessen Flexibilität, so dass die Wickelwelle als Ganzes gekrümmt ausgebildet sein kann und an einer Wölbung bzw. Bombierung eines Fahrzeugdachs folgen kann, und sich die Hüllrohranordnung trotzdem auf der Lagerstrebe drehen kann. Der Stabilisierungsabschnitt gewährleistet wiederum, dass das Hüllrohrelement eine hinreichende Steifigkeit hat, um Torsionsmomente zumindest weitgehend toleranzfrei von einem Ende an das andere Ende der Hüllrohranordnung übertragen zu können. Dann kann bei einer mittels einer Wickelfeder angetriebenen Hüllrohranordnung auf zusätzliche Rollfedern verzichtet werden. Der Stabilisierungsabschnitt kann hinsichtlich seiner Position an dem Hüllrohrelement und seiner Breite optimal hinsichtlich des Torsionsverhaltens der Hüllrohranordnung eingestellt werden.

Bei der Rolloanordnung nach der Erfindung umfasst das Hüllrohrelement ein Basisrohr, das zur Ausbildung des mindestens einen Stabilisierungsabschnitts eine Kunststoffumspritzung aufweist. Durch Auswahl eines geeigneten Kunststoffmaterials kann die Kunststoffumspritzung mit einer geringen Schichtdicke auf dem Basisrohr ausgebildet sein.

Das Basisrohr ist insbesondere ein Wellrohr, dessen maximaler Außenradius, das heißt dessen Radius im Bereich der Wellenberge dem Radius einer Umfangsfläche der Kunststoffumspritzung entspricht. Durch die dann geringe Wandstärke der Kunststoffumspritzung kann vermieden werden, dass sich der Stabilisierungsabschnitt an der Rollobahn abzeichnet und dass der Stabilisierungsabschnitt zu einer Vergrößerung des Wickeldurchmessers des von der Rollobahn auf der Wickelwelle gebildeten Rollowickels im Bereich des Stabilisierungsabschnitts führt. Das Wellrohr ist an seiner Innenseite durchgängig homogen, das heißt gerippt ausgebildet.

Alternativ ist das Hüllrohr aus einem einstückigen Kunststoffrohr gebildet, das zur Ausbildung der Flexabschnitte Wellrohrabschnitte und zur Ausbildung des Stabilisierungsabschnitts einen Glattrohrabschnitt umfasst.

Das einstückige Kunststoffrohr ist nach einem kombinierten Extrusions- und Blasform-Verfahren herstellbar. So können beispielsweise extrudierte Schläuche, die einkomponentig oder auch zweikomponentig ausgebildet sind, in einer geeigneten Blasform zu Blasformteilen geformt werden, die jeweils Wellrohrabschnitte und mindestens einen Glattrohrabschnitt aufweisen. Insbesondere können mehrere Wellrohrabschnitte und mehrere Glattrohrabschnitte im Wechsel ausgebildet sein. Der extrudierte Schlauch wird in dem Blasformwerkzeug mittels Druckluft von innen an die Werkzeugwände gedrückt oder durch Erzeugung eines Vakuums an die Werkzeugwände gezogen und dann ausgehärtet. Die Breite und die Position der Wellrohrabschnitte und des mindestens einen Glattrohrabschnitts kann anwendungsfallabhängig optimiert ausgebildet werden. Da der Glattrohrabschnitt nicht nur an der Außenseite, sondern auch an seiner Innenseite glatt ausgebildet sein kann, zeichnet sich diese Ausführungsform auch durch ein optimiertes Geräuschverhalten bei seiner Drehung auf der fahrzeugfesten Lagerstrebe aus.

Der Begriff "Glattrohrabschnitt" ist in seinem weitesten Sinne zu verstehen, das heißt der Glattrohrabschnitt hat eine zumindest weitgehend glatte Außenfläche, die aber gegebenenfalls durch kleine Rippen oder Nuten unterbrochen sein kann.

Die Rolloanordnung nach der Erfindung ist bei einer bevorzugten Ausführungsform als seitengeführtes Rollo ausgebildet, dessen Rollobahn an ihren bezogen auf eine Rollolängsmittelebene seitlichen Rändern jeweils ein Führungsband aufweist. Es ist denkbar, dass die Führungsbänder jeweils als Rollfeder ausgebildet sind, die ein Antriebselement zum Aufwickeln der Rollobahn darstellt.

Bei einer speziellen Ausführungsform der Rolloanordnung nach der Erfindung umgreift das Hüllrohrelement eine Wickelfeder, die einerseits an die Lagerstrebe und andererseits an die Hüllrohranordnung angebunden ist. Die Wickelfeder ist insbesondere an eine Lagerbuchse der Hüllrohranordnung angebunden, die an einer Stirnseite des Hüllrohrelements angeordnet ist. Durch den mindestens einen Stabilisierungsabschnitt kann das von der Wickelfeder auf die Lagerbuchse ausgeübte Drehmoment so bis an die andere Stirnseite des Hüllrohrelements übertragen werden, ohne dass das Hüllrohrelement eine wesentliche Torsion erfährt, welche zu einer Schwergängigkeit eines seitengeführten Rollos aufgrund eines Relativversatzes der beidseits angeordneten Führungsbänder und zu einer Faltenbildung der Rollobahn führen könnte.

Zwischen den Lagerbuchsen und dem Hüllrohrelement der Hüllrohranordnung kann jeweils ein Koppelelement drehfest angebunden sein. Das Koppelelement ist bei einer speziellen Ausführungsform der Rolloanordnung nach der Erfindung jeweils aus einer Kunststoffumspritzung des Hüllrohrelements gebildet. Die Kunststoffumspritzung zur Ausbildung des Koppelelements kann zusammen mit der Kunststoffumspritzung zur Ausbildung des mindestens einen Stabilisierungsabschnitts erzeugt werden. Die Ausbildung der verschiedenen Funktionsbereiche der Hüllrohranordnung kann also in einem einzigen Spritzgießprozess erfolgen. Zusätzliche Arbeitsgänge sind nicht erforderlich.

Weitere Vorteile und vorteilhafte Ausgestaltungen des Gegenstandes der Erfindung sind der Beschreibung, der Zeichnung und den Patentansprüchen entnehmbar.

Ausführungsbeispiele von Rolloanordnungen nach der Erfindung sind in der Zeichnung schematisch vereinfacht dargestellt und werden in der nachfolgenden Beschreibung näher erläutert. Es zeigt
- Figur 1: eine Draufsicht auf ein Fahrzeugdach mit einer Rolloanordnung nach der Erfindung;
- Figur 2: einen schematischen Längsschnitt durch eine Wickelwelle der Rolloanordnung;
- Figur 3: eine Draufsicht auf eine Hüllrohranordnung der Wickelwelle; und
- Figur 4: einen stark schematischen Schnitt durch die Hüllrohranordnung nach Figur 3 entlang der Linie IV-IV in Figur 3;
- Figur 5: eine Draufsicht auf eine alternative Ausfuhrungsform einer Hüllrohranordnung; und
- Figur 6: einen Schnitt durch die Hüllrohranordnung nach Figur 5 entlang der Linie VI-VI in Figur 5.

In der Zeichnung ist ein Fahrzeugdach 10 eines ansonsten nicht näher dargestellten Personenkraftwagens gezeigt, das einen Dachausschnitt 12 aufweist, welcher mittels eines hier nicht näher dargestellten, transparenten Deckelelements geschlossen oder zumindest teilweise freigegeben werden kann.

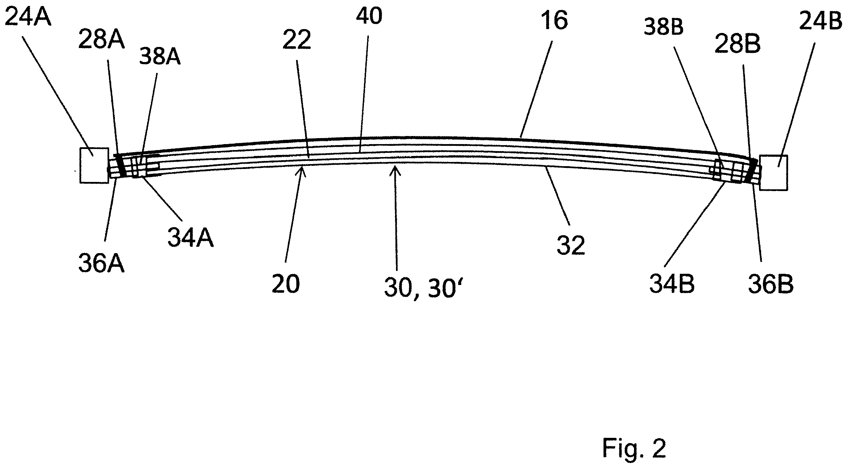

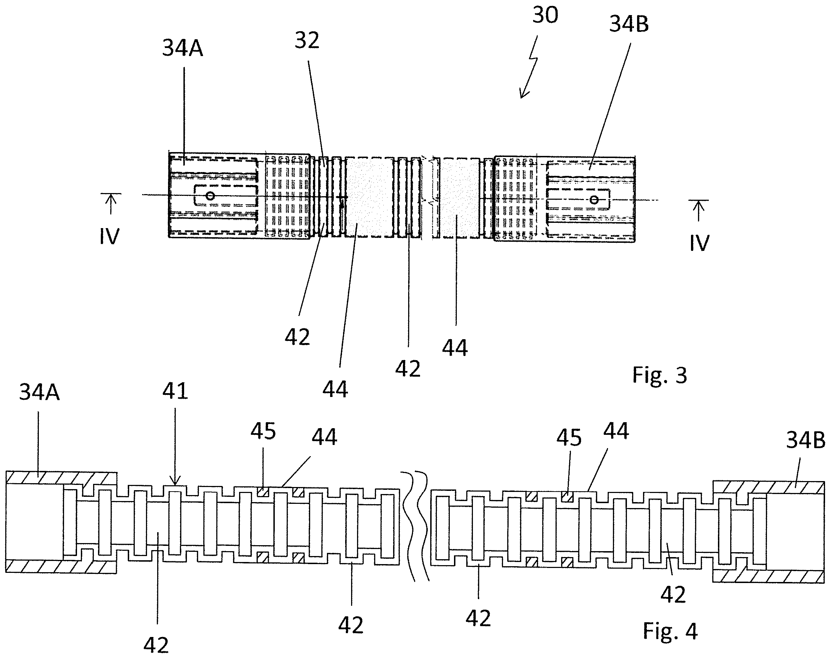

Das Fahrzeugdach 10 umfasst als Beschattungselement für den Dachausschnitt 12 eine Rolloanordnung 14, die eine Rollobahn 16 aus einem faltbaren bzw. wickelbaren, blickdichten Stoff aufweist. An ihrem freien Rand hat die Rollobahn 16 einen sich in Fahrzeugquerrichtung erstreckenden Zugspriegel 18. An ihrem dem Zugspriegel 18 abgewandten Rand ist die Rollobahn 16 an einer Wickelwelle 20 befestigt, die sich ebenfalls in Fahrzeugquerrichtung erstreckt. Die anhand der Figuren 2 bis 4 detailliert dargestellte Wickelwelle 20 hat in Fahrzeugquerrichtung einen gekrümmten Verlauf und umfasst eine gekrümmte fahrzeugfeste Lagerstrebe 22, die bezogen auf eine vertikale Rollolängsmittelebene beidseits jeweils mit einem fahrzeugfesten Lagerelement 24A bzw. 24B verbunden ist. Die Lagerelemente 24A und 24B sind jeweils heckseitig an einer Führungsschiene 26A bzw. 26B angeordnet, welche sich in Fahrzeuglängsrichtung bzw. in Auszugsrichtung der Rollobahn 16 erstreckt und in welcher ein jeweiliger seitlicher Rand der Rollobahn 16 über ein mit der Rollobahn 16 verbundenes, jeweiliges Führungsband 28A bzw. 28B geführt ist.

Die Wickelwelle 20 der Rolloanordnung 14 umfasst eine flexible Hüllrohranordnung 30, welche die Lagerstrebe 22 umgreift. Die Hüllrohranordnung 30 umfasst ein flexibles Hüllrohrelement 32 aus Kunststoff, das an seinen bezogen auf die vertikale Rollolängsmittelebene beidseits angeordneten Enden jeweils mit einer ein Koppelelement 34A bzw. 34B darstellenden Kunststoffumspritzung versehen ist. Über die Koppelelemente 34A und 34B ist das Hüllrohrelement 32 beidseits jeweils an eine Lagerbuchse 36A bzw. 36B angebunden, die auf einem jeweiligen Lagerzapfen 38A bzw. 38B gelagert ist, welcher Bestandteil der Lagerstrebe 22 ist und an dem jeweiligen Lagerelement 24A bzw. 24B ausgebildet ist.

Die Lagerstrebe 22 umfasst neben den beidseits angeordneten Lagerzapfen 38A und 38B ein Zentralrohr 40, das mit den beiden Lagerzapfen 38A und 38B verbunden ist.

Das Hüllrohrelement 32 umfasst als Basisrohr ein Wellrohr 41 und ist an seinen beiden Enden jeweils mit ein Koppelelement 34A und 34B versehen. In Achsrichtung betrachtet umfasst das Hüllrohrelement 32 mehrere Flexabschnitte 42, die durch das flexible Wellrohr 41 bzw. Basisrohr selbst gebildet sind und die durch Stabilisierungsabschnitte 44 unterbrochen sind. Die Flexabschnitte 42 geben die Flexibilität des Hüllrohrelements 32 vor. Die Stabilisierungsabschnitte 44, deren Torsionssteifigkeit bzw. -festigkeit größer ist als diejenige der Flexabschnitt 42, umfassen einen Wellrohrabschnitt des Basisrohrs, der mit einer ringförmigen Umspritzung 45 aus einem formstabilen Kunststoff versehen ist.

Die Kunststoffumspritzungen 45 der Stabilisierungsabschnitte 44 haben eine ebene Umfangsfläche, deren Außenradius mit dem Außenradius des Wellrohrs 41 im Bereich der Flexabschnitte 42 im Wesentlichen korrespondiert. Die Stabilisierungsabschnitte 44 versteifen über ihre jeweilige Breite das Basisrohr, so dass die Gesamttorsionssteifigkeit des Hüllrohrelements 32 gegenüber einem Hüllrohrelement ohne Stabilisierungsabschnitte erhöht ist.

Die Koppelelemente 34A und 34B stellen ebenfalls Kunststoffumspritzungen des Wellrohrs dar und werden bei der Herstellung in einem Arbeitsgang mit den Kunststoffumspritzungen 45 der Stabilisierungsabschnitte 44 in dem gleichen Spritzgießwerkzeug an dem Wellrohr ausgebildet.

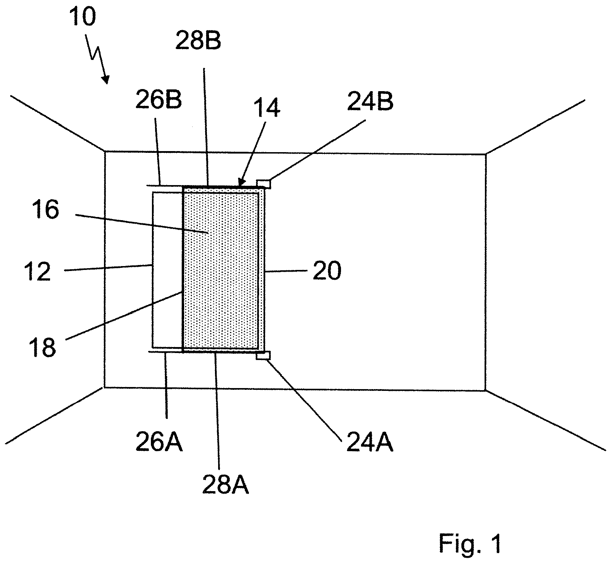

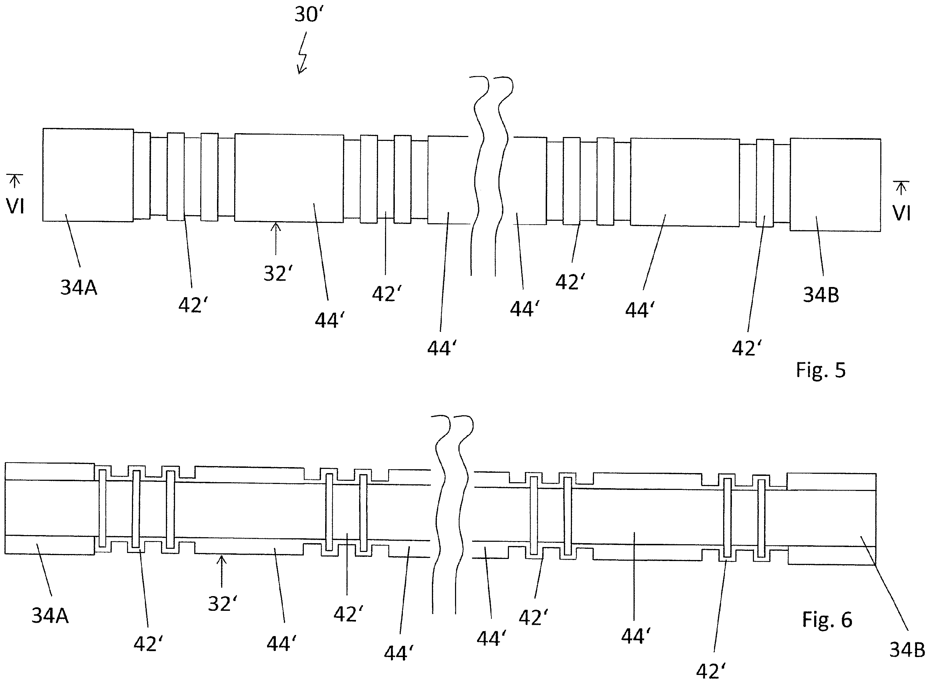

In den Figuren 5 und 6 ist eine alternative Ausführungsform einer Hüllrohranordnung 30' für eine Rolloanordnung der in den Figuren 1 und 2 dargestellten Art gezeigt. Die Hüllrohranordnung 30' umfasst ein Hüllrohrelement 32', das entsprechend der Ausführungsform nach den Figuren 2 bis 4 an seinen beiden Enden jeweils mit einem Koppelelement 34A bzw. 34B versehen ist, das eine Kunststoffumspritzung des Hüllrohrelements 32' darstellt.

Das Hüllrohrelement 32' umfasst in Achsrichtung betrachtet alternierend Flexabschnitte 42' und Stabilisierungsabschnitte 44', die in einstückiger Weise nach einem kombinierten Strangpress- und Blasform-Verfahren ausgebildet sind. Die Flexabschnitte 42' sind Wellrohrabschnitte, die durch die Rippung eine Flexibilität des Hüllrohrelements 32' gewährleisten, so dass die Hüllrohranordnung 30' drehbar auf der Lagerstrebe 22 gelagert werden kann. Die Stabilisierungsabschnitte 44' sind Glattrohrabschnitte mit glatter Außenfläche und glatter Innenfläche, welche eine erhöhte Steifigkeit und Torsionsfestigkeit gegenüber den Flexabschnitten 42' aufweisen und so die Gesamttorsionsfestigkeit der Hüllrohranordnung 30' erhöhen. Damit kann ein von einer Wickelfeder beispielsweise in das Koppelelement 34A oder die Lagerbuchse 36A eingetragenes Drehmoment ohne oder ohne wesentliche Torsion der Hüllrohranordnung 30' bis zu dem Koppelelement 34B und der Lagerbuchse 36B übertragen werden. Dies gewährleistet wiederum, dass die Führungsbänder 28A und 28B synchron und ohne Versatz zusammen mit der Rollobahn 16 auf die Hüllrohranordnung 30' aufgewickelt werden können und eine Schwergängigkeit der Rolloanordnung und eine Faltenbildung der Rollobahn 16 vermieden werden kann.

### Bezugszeichenliste

- 10: Fahrzeugdach
- 12: Dachausschnitt
- 14: Rolloanordnung
- 16: Rollobahn
- 18: Zugspriegel
- 20: Wickelwelle
- 22: Lagerstrebe
- 24A, 24B: Lagerelement
- 26A, 26B: Führungsschiene
- 28A, 28B: Führungsband
- 30,30': Hüllrohranordnung
- 32,32': Hüllrohrelement
- 34A, 34B: Koppelelement
- 36A, 36B: Lagerbuchse
- 38A, 38B: Lagerzapfen
- 40: Zentralrohr
- 41: Wellrohr
- 42,42': Flexabschnitte
- 44,44': Stabilisierungsabschnitte
- 45: Kunststoffumspritzung

## Patentansprüche

1. Rolloanordnung für ein Kraftfahrzeug, umfassend eine Rollobahn (16) und eine Wickelwelle (20), auf die die Rollobahn (16) aufwickelbar ist oder von der die Rollobahn (16) abwickelbar ist und die eine flexible Hüllrohranordnung (30, 30') umfasst, die von einer fahrzeugfesten Lagerstrebe (22) durchgriffen ist, wobei die Hüllrohranordnung (30, 30') ein Hüllrohrelement (32, 32') umfasst, das in Achsrichtung betrachtet mehrere Flexabschnitte (42, 42') umfasst, die von mindestens einem Stabilisierungsabschnitt (44, 44') unterbrochen sind, der gegenüber den Flexabschnitten (42, 42') eine erhöhte Torsionsfestigkeit hat, **dadurch gekennzeichnet, dass** das Hüllrohrelement (32) ein Basisrohr umfasst, das zur Ausbildung des mindestens einen Stabilisierungsabschnitts (44, 44') eine Kunststoffumspritzung (45) aufweist, oder dass das Hüllrohrelement (32') aus einem einstückigen Kunststoffrohr gebildet ist, das zur Ausbildung der Flexabschnitte (42') Wellrohrabschnitte und zur Ausbildung des Stabilisierungsabschnitts (44') einen Glattrohrabschnitt umfasst, wobei die Wellrohrabschnitte durch eine Rippung eine Flexibilität des Hüllrohrelements (32') gewährleisten.

2. Rolloanordnung nach Anspruch 1, **dadurch gekennzeichnet, dass** das Basisrohr ein Wellrohr (41) ist.

3. Rolloanordnung nach Anspruch 2, **dadurch gekennzeichnet, dass** die Kunststoffumspritzung eine Umfangsfläche bildet, deren Radius einen maximalen Außenradius des Wellrohrs (41) entspricht.

4. Rolloanordnung nach einem der Ansprüche 1 bis 3, **dadurch gekennzeichnet, dass** das Hüllrohrelement (32') ein Blasformteil ist.

5. Rolloanordnung nach einem der Ansprüche 1 bis 4, **dadurch gekennzeichnet, dass** die Rollobahn (16) an ihren bezogen auf eine Rollolängsmittelebene seitlichen Rändern jeweils ein Führungsband (28A, 28B) aufweist.

6. Rolloanordnung nach einem der Ansprüche 1 bis 5, **dadurch gekennzeichnet, dass** das Hüllrohrelement (32, 32') eine Wickelfeder umgreift, die einerseits an die Lagerstrebe (22) und andererseits an die Hüllrohranordnung (30, 30') angebunden ist.

7. Rolloanordnung nach einem der Ansprüche 1 bis 6, **dadurch gekennzeichnet, dass** das Hüllrohrelement (32, 32') an seinen beiden Stirnseiten jeweils drehfest mit einer Lagerbuchse (36A, 36B) versehen ist.

8. Rolloanordnung nach Anspruch 7, **dadurch gekennzeichnet, dass** zwischen den Lagerbuchsen (36A, 36B) und dem Hüllrohrelement (32, 32') jeweils ein Koppelelement (34A, 34B) drehfest angebunden ist.

9. Rolloanordnung nach Anspruch 8, **dadurch gekennzeichnet, dass** die Koppelelemente (34A, 34B) jeweils aus einer Kunststoffumspritzung des Hüllrohrelements (32, 32') gebildet sind.

10. Rolloanordnung nach einem der Ansprüche 1 bis 9, **dadurch gekennzeichnet, dass** die Lagerstrebe (22) gekrümmt ausgebildet ist.

## Claims

1. A roller blind arrangement for a motor vehicle, the roller blind arrangement comprising a roller blind web (16) and a winding shaft (20) onto which the roller blind web (16) can be wound and from which the roller blind web (16) can be unwound and which comprises a flexible hollow tube arrangement (30, 30') penetrated by a bearing beam (22) attached to the vehicle, the hollow tube arrangement (30, 30') comprising a hollow tube element (32, 32') which, viewed in the axial direction, comprises multiple flexible portions (42, 42') interrupted by at least one stabilizing portion (44, 44') having greater torsional strength than the flexible portions (42, 42'), **characterized in that** the hollow tube element (32) comprises a base tube having a plastic overmolding (45) for forming the at least one stabilizing portion (44, 44'), or that the hollow tube element (32') is formed by a single-piece plastic tube comprising corrugated tube portions for forming the flexible portions (42') and a smooth tube portion for forming the stabilizing portion (44'), the corrugated tube portions ensuring a flexibility of the hollow tube element (32') by having ribs.

2. The roller blind arrangement according to claim 1, **characterized in that** the base tube is a corrugated tube (41).

3. The roller blind arrangement according to claim 2, **characterized in that** the plastic overmolding forms a circumferential surface whose radius is equal to a maximum outer radius of the corrugated tube (41).

4. The roller blind arrangement according to any one of claims 1 to 3, **characterized in that** the hollow tube element (32') is a blow-molded part.

5. The roller blind arrangement according to any one of claims 1 to 4, **characterized in that** the roller blind web (16) has a guide tape (28A, 28B) at each of its lateral edges with respect to a roller blind longitudinal center plane.

6. The roller blind arrangement according to any one of claims 1 to 5, **characterized in that** the hollow tube element (32, 32') surrounds a winding spring connected to the bearing beam (22) on one side and to the hollow tube arrangement (30, 30') on the other side.

7. The roller blind arrangement according to any one of claims 1 to 6, **characterized in that** the hollow tube element (32, 32') is provided with a bearing bush (36A, 36B) in a non-rotating manner at each of its two ends.

8. The roller blind arrangement according to claim 7, **characterized in that** a coupling element (34A, 34B) is connected in a non-rotating manner between each of the bearing bushes (36A, 36B) and the hollow tube element (32, 32').

9. The roller blind arrangement according to claim 8, **characterized in that** each coupling element (34A, 34B) is formed by a plastic overmolding of the hollow tube element (32, 32').

10. The roller blind arrangement according to any one of claims 1 to 9, **characterized in that** the bearing beam (22) is curved.

## Revendications

1. Arrangement de store enroulant pour un véhicule automobile, l'arrangement de store enroulant comprenant un lé de store enroulant (16) et un arbre d'enroulement (20) sur lequel le lé de store enroulant (16) peut être enroulé ou déroulé et qui comprend un arrangement de tube enveloppe (30, 30') flexible qui est pénétré par une barre de support (22) fixée au véhicule, l'arrangement de tube enveloppe (30, 30') comprenant un élément de tube enveloppe (32, 32') qui, vue dans la direction axiale, comprend plusieurs parties flexibles (42, 42') qui sont interrompues par au moins une partie de stabilisation (44, 44') dont la résistance à la torsion est supérieure à celle des parties flexibles (42, 42'), **caractérisé en ce que** l'élément de tube enveloppe (32) comprend un tube de base qui a un surmoulage plastique (45) pour former l'au moins un partie de stabilisation (44, 44') ou **en ce que** l'élément de tube enveloppe (32') est formé par un tube plastique d'un seul tenant qui comprend des parties de tube ondulées pour former les parties flexibles (42') et une partie de tube lisse pour former la partie de stabilisation (44'), les parties de tube ondulées assurant une flexibilité de l'élément de tube enveloppe (32') en ayant des nervures.

2. Arrangement de store enroulant selon la revendication 1, **caractérisé en ce que** le tube de base est un tube ondulé (41).

3. Arrangement de store enroulant selon la revendication 2, **caractérisé en ce que** le surmoulage plastique forme une surface circonférentielle dont le rayon est égal à un rayon extérieur maximal du tube ondulé (41).

4. Arrangement de store enroulant selon l'une quelconque des revendications 1 à 3, **caractérisé en ce que** l'élément de tube enveloppe (32') est une pièce moulée par soufflage.

5. Arrangement de store enroulant selon l'une quelconque des revendications 1 à 4, **caractérisé en ce que** le lé de store enroulant (16) a une bande de guidage (28A, 28B) à chacun de ses bords latéraux par rapport à un plan central longitudinal du store enroulant.

6. Arrangement de store enroulant selon l'une quelconque des revendications 1 à 5, **caractérisé en ce que** l'élément de tube enveloppe (32, 32') entoure un ressort d'enroulement qui est relié avec la barre de support (22) d'un côté et avec l'arrangement de tube enveloppe (30, 30') de l'autre côté.

7. Arrangement de store enroulant selon l'une quelconque des revendications 1 à 6, **caractérisé en ce que** l'élément de tube enveloppe (32, 32') est muni d'un coussinet (36A, 36B) de manière solidaire en rotation à chacune de ses extrémités.

8. Arrangement de store enroulant selon la revendication 7, **caractérisé en ce qu'**un élément de couplage (34A, 34B) est relié de manière solidaire en rotation entre chaque coussinet (36A, 36B) et l'élément de tube enveloppe (32, 32').

9. Arrangement de store enroulant selon la revendication 8, **caractérisé en ce que** chaque élément de couplage (34A, 34B) est formé par un surmoulage plastique de l'élément de tube enveloppe (32, 32').

10. Arrangement de store enroulant selon l'une quelconque des revendications 1 à 9, **caractérisé en ce que** la barre de support (22) est courbée.
